# FASCICULE DE BREVET EUROPEEN

(11) **EP 2 878 537 B1**
(45) Date de publication et mention de la délivrance du brevet: **26.04.2017**
(21) Numéro de dépôt: 14194293.8
(22) Date de dépôt: 21.11.2014
(51) Int. Cl.: B64D 11/06, B64D 25/04

(54) **Siège baquet à cinématique évolutive**
Schalensitz mit erweiterbarer Kinematik
Bucket seat with scalable kinematics

(30) Priorité: 27.11.2013 FR 1361702
(43) Date de publication de la demande: 03.06.2015
(73) Titulaire: Stelia Aerospace, 17300 Rochefort (FR)
(72) Inventeur: Morais, Christian, 17000 LA ROCHELLE (FR); Cecinas, Laurent, 17870 BREUIL MAGNE (FR)
(74) Mandataire: Ipside

(56) Documents cités:
- EP-A1- 2 305 561
- US-A1- 2007 035 167
- US-B1- 6 237 889
- US-B2- 7 628 357

## Description

L'invention appartient au domaine des sièges pour véhicule de transport. Elle concerne plus particulièrement un siège pour une cabine d'un véhicule de transport par terre, mer ou air. Un tel siège est par exemple installé dans une cabine d'un aéronef.

De manière générale les sièges utilisés dans les véhicules de transport sont confrontés à des problèmes d'encombrement de la structure du siège qui doit être compatible avec les autres structures du véhicule, avec des restrictions d'espace tels que par exemple l'accès à des issues de secours, ou encore à la mise en place d'équipements pouvant être montés temporairement, tout en apportant un niveau de confort souhaité pour l'occupant du siège.

Souvent, le siège comporte des éléments réglables accessibles à l'occupant du siège qui permettent à ce dernier d'adapter l'ergonomie du siège à son anatomie ou à des conditions particulières. Ainsi il est fréquent qu'un siège soit réglable, avec une certaine amplitude, en position longitudinale, en hauteur d'assise, en inclinaison du dossier ...

Par exemple le siège décrit dans la demande de brevet EP 2305561 comporte un baquet rigide dont la hauteur est réglable sur des montants du piètement qui sont inclinés vers l'arrière. Il résulte de cet agencement que la partie la plus arrière du siège recule lorsque le baquet est relevé et risque en conséquence d'interférer avec une structure située derrière le siège.

De manière générale, les parties mobiles du siège doivent éviter les interférences avec les autres structures du véhicule ce qui conduit à des contraintes supplémentaires pouvant limiter les possibilité de réglage et pouvant conduire à la mise en oeuvre de solution complexes et lourdes qui sont autant de sources de perte de fiabilité du siège et d'augmentation de ses coûts de fabrication et d'entretien.

Pour ces diverses raisons, un siège adapté à l'environnement d'un emplacement dans un véhicule donné n'est pas nécessairement adapté à l'environnement d'un autre véhicule ou d'un autre emplacement dans le même véhicule.

Dans ces situations, il est alors nécessaire soit de disposer d'un siège différent pour répondre à des situations particulières, soit de dégrader les possibilités de réglage du siège. Par exemple, il est connu dans les avions de transport de passager que la possibilité d'incliner le dossier d'un siège est supprimée ou condamnée lorsque le siège est installé dans la cabine avec l'arrière du dossier très proche d'une cloison.

La présente invention propose un siège dont la structure est adaptée pour modifier la position longitudinale d'un point le plus arrière d'un siège sans affecter sensiblement les possibilités de réglage du siège.

L'invention concerne un siège de véhicule comportant un baquet, ledit baquet comportant une assise et un dossier, intégral avec l'assise ou fixé rigidement à l'assise, comportant une structure porteuse sur laquelle est fixé le baquet et comportant des fixations pour fixer la structure porteuse à une structure du véhicule, par exemple un plancher du véhicule ou des poutres de structure du véhicule, une hauteur du baquet sur la structure porteuse étant réglable.

En outre, la structure porteuse :
- comporte un sous-ensemble bas formant un piètement du siège et dont au moins un support de baquet est monté mobile en hauteur, suivant une direction sensiblement verticale déterminée par un ou des rails de guidage inférieurs, fixes dans un repère siège, de la structure inférieure ;
- comporte un sous-ensemble haut assemblé au sous-ensemble bas, mobile en rotation par rapport audit sous-ensemble bas autour d'un axe de basculement, sensiblement perpendiculaire à un plan de symétrie XZ d'ensemble du siège, situé sur le sous-ensemble bas dans une zone à proximité d'une extrémité inférieure du ou des rails de guidage inférieurs et situé sur le sous-ensemble haut dans une zone proche d'une extrémité inférieure du sous-ensemble haut ;
- le sous-ensemble haut comporte un ou des rails de guidage supérieurs, sensiblement verticaux situés au-dessus du ou des rails de guidage inférieurs ;
et le baquet est solidaire du au moins un support de baquet de manière articulée au niveau de l'assise autour d'un axe perpendiculaire au plan de symétrie d'ensemble du siège et comporte des éléments de guidage, fixés au dossier, coulissant dans les rails de guidage supérieurs.

Le siège peut être par exemple un siège pour un passager ou un opérateur technique ou pour un conducteur ou pilote du véhicule et le véhicule peut être par exemple un véhicule roulant ou un navire de surface ou un aéronef.

Il est ainsi obtenu un siège avec un baquet, dont l'assise et le dossier sont rigidement liés, dont le déplacement horizontal d'avant en arrière d'un point le plus en arrière du siège peut être limité, par un réglage de la structure porteuse, en limitant les effets sur l'inclinaison longitudinale du baquet des réglages en hauteur du baquet.

Pour répondre à des besoins d'inclinaisons différentes par exemple en raison d'un environnement différent du siège, le sous-ensemble haut comporte au moins deux positions angulaires stables autour de l'axe de basculement : une position inclinée vers l'arrière et une position redressée. Il est ainsi modifié l'espace occupé par le siège dans une partie arrière du siège, en particulier lorsque le baquet est placé dans une position haute.

Dans une forme de réalisation, le sous-ensemble bas comporte au moins deux équerres, chaque équerre comportant une branche verticale, sensiblement verticale, comportant au moins un rail de guidage inférieur s'étendant sur toute ou partie d'une longueur de la branche verticale concernée.

La branche verticale, et en particulier un axe longitudinal du au moins un rail de guidage inférieur, fait en pratique un angle proche de la verticale choisi pour correspondre à un déplacement vers l'avant ou l'arrière souhaité du baquet en fonction de sa hauteur, par exemple un angle compris entre 0 et 20 degrés.

Dans une forme de réalisation, le sous-ensemble haut comporte au moins deux montants latéraux solidarisés par au moins une traverse, chaque montant latéral comportant au moins un rail de guidage supérieur.

Il est ainsi obtenu une structure relativement légère et suffisamment rigide pour reprendre les efforts transmis par le dossier du baquet et qui permet de modifier l'inclinaison du sous-ensemble haut.

Les moyens de verrouillage sont par exemple agencés sur le sous-ensemble haut pour immobiliser en rotation autour de l'axe de basculement le sous-ensemble haut par rapport au sous-ensemble bas et ou sont agencés sur le sous-ensemble bas pour immobiliser en rotation autour de l'axe de basculement le sous-ensemble haut par rapport audit sous-ensemble bas.

Il est ainsi possible de libérer la rotation du sous-ensemble haut par une action sur les moyens de verrouillage et de bloquer cette rotation à une position angulaire souhaitée autorisée par les moyens de verrouillage.

Dans une forme de réalisation, le ou les supports de baquet comportent chacun au moins un bras antérieur orienté vers l'avant du siège et dont une extrémité avant est articulée sous l'assise.

Suivant cet agencement, les efforts liés au poids du baquet et en particulier au poids de son occupant pouvant être soumis à des accélérations verticales sont repris dans une position longitudinale avancée sous l'assise pour être transmis au piètement du fauteuil et en autorisant un basculement longitudinal du paquet lors des modifications de l'angle dont est inclinée le sous-ensemble haut ou lors du déplacement en hauteur du baquet.

Dans une forme de réalisation, le bras antérieur est sans déformation permanente sensible lorsque le siège est soumis à des accélérations limites en utilisation et déformable lorsque le siège est soumis à des accélérations d'un cas de crash de sorte à absorber l'énergie. Ainsi le bras subit sans déformation résiduelles sensibles les accélération pouvant être rencontrées dans les conditions d'utilisation normales, les déformations restant dans le domaine élastique du bras antérieur, et par des déformations irréversibles absorbe une énergie en cas d'accélération de crash ce qui permet de limiter l'accélération subie par l'occupant du siège.

Dans une autre forme de réalisation, combinable à la forme précédente, le bras antérieur comporte des moyens d'absorption dynamique de l'énergie en cas de crash, par exemple des bielles absorbant l'énergie par friction ou par déformation.

Il est ainsi simplifié la conception du bras, une partie au moins de l'énergie liée aux accélérations en cas de crash étant absorbée les moyens d'absorption dynamique.

Suivant un mode de réalisation, le sous-ensemble haut comporte une position angulaire autour de l'axe de basculement, dans laquelle ledit sous-ensemble haut est verrouillable par rapport au sous-ensemble bas telle que lors de mouvements verticaux du baquet une partie la plus arrière du siège est, en position verrouillée du sous-ensemble haut, sensiblement fixe suivant une direction longitudinale du siège, vers l'avant ou vers l'arrière du siège, dans un repère siège fixe par rapport au sous-ensemble bas.

Le siège dispose ainsi d'une position stable du sous-ensemble haut pour laquelle une limite arrière du siège est sensiblement fixe lors des modifications de la hauteur du baquet.

Du fait du léger basculement du baquet vers l'arrière lors de sa descente en cas de crash, le passager se trouve également plus incliné vers l'arrière ce qui limite le risque de son glissement vers l'avant sur le baquet sous l'effet de l'accélération due au crash, phénomène connu sous le nom de sous-marinage.

La description et les dessins d'un mode particulier de réalisation de l'invention, permettront de mieux comprendre les buts et avantages de l'invention. Il est clair que cette description est donnée à titre d'exemple, et n'a pas de caractère limitatif.

Dans les dessins :
- la figure 1 illustre en vue perspective depuis l'arrière un exemple de siège suivant l'invention ;
- la figure 2 illustre en vue perspective depuis l'avant la structure porteuse du baquet, sans le baquet, du siège de la figure 1 ;
- la figure 3a illustre en vue de côté le siège de la figure 1 dans une position basse et inclinée vers l'arrière du baquet ;
- la figure 3b illustre en vue de côté le siège de la figure 1 dans la même position basse que sur la figure 3a avec une inclinaison moindre vers l'arrière du baquet et montre l'écart sur la position de l'arrière du siège ;
- les figures 4a et 4b illustrent en vue de profil le siège de la figure 1 dans une position inclinée vers l'arrière du baquet, comme sur la figure 3a, dans les positions basse, figure 4a, et haute, figure 4b, et montre l'écart sur la position de l'arrière du siège ;
- les figures 5a et 5b illustrent en vue de profil le siège de la figure 1 dans une position redressée du baquet, comme sur la figure 3b, dans les positions basse, figure 5a, et haute, figure 5b, et montre l'alignement des positions de l'arrière du siège.

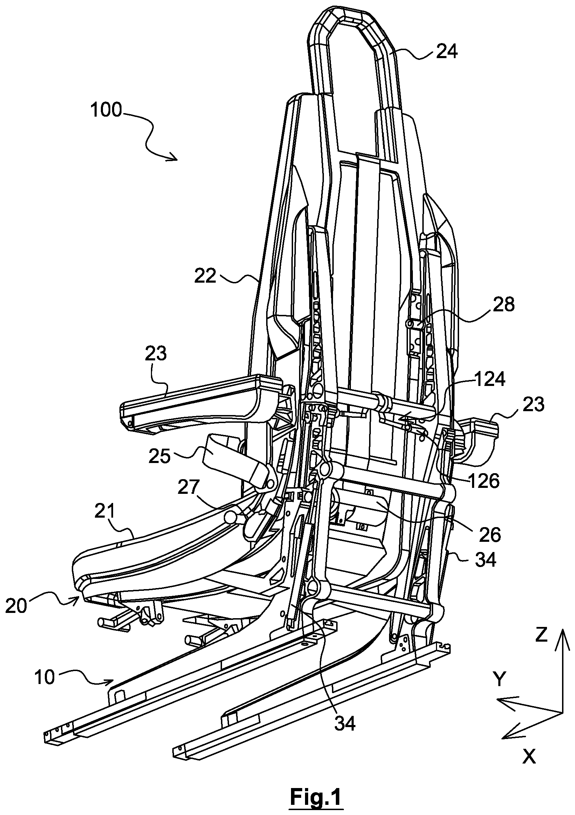

La figure 1 montre, vue en perspective depuis l'arrière et en contre-plongée, un siège 100 suivant l'invention.

On utilisera dans la suite de la description un repère siège X, Y, Z pour les axes respectivement longitudinaux, transversaux et verticaux du siège. Suivant l'axe longitudinal X, on utilisera les termes tels que « avant », « arrière », « antérieur », « postérieur » ..., et suivant l'axe vertical Z on utilisera les termes tels que « haut », « bas », « dessus », « dessous » ... en faisant référence au sens commun qui leurs serait donné par un occupant du siège.

Le siège présente un plan de symétrie d'ensemble vertical XZ.

Le siège 100 comporte principalement une structure porteuse 10 maintenant un baquet 20 destiné à recevoir un occupant en position assis.

Le baquet 20 comporte principalement une coque dont la structure rigide forme une assise 21 et un dossier 22.

Ce type de baquet est connu. Il peut être réalisé par exemple en matériaux composites ce qui permet d'obtenir des formes ergonomiques de l'assise et du dossier avec une grande rigidité et une masse relativement réduite.

A la coque rigide sont également fixés divers accessoires, généralement associés à des sièges tels que des sièges d'aéronef, en particulier des coussins d'assise et de dossier, des accoudoirs 23, un appui tête 24, un harnais de sécurité 25, dans l'exemple illustré avec un enrouleur 26 de harnais d'épaule, des moyens de verrouillage/déverrouillage de déplacements du siège ou du baquet 20 par rapport à la structure porteuse 10.

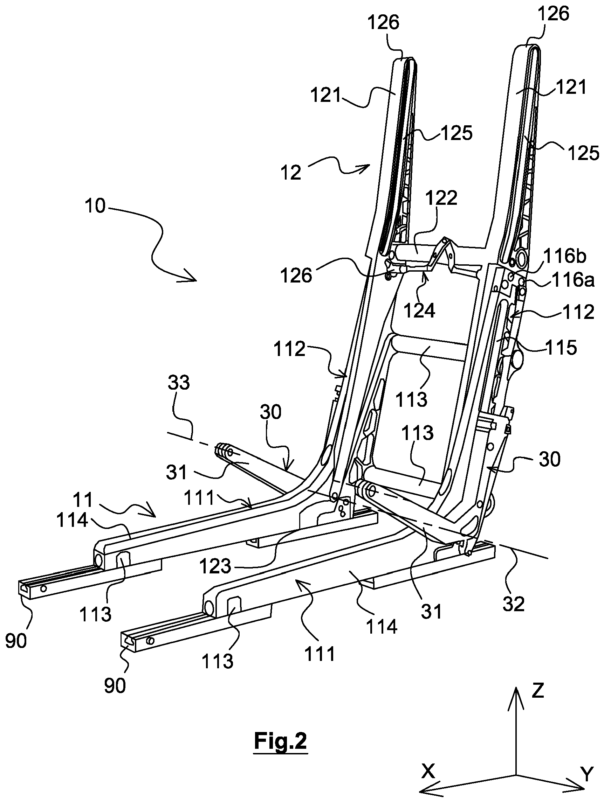

La structure porteuse 10 est représentée sur la figure 2 en vue perspective sans le baquet et ses éléments accessoires.

La structure porteuse 10 comporte principalement un sous-ensemble bas 11 et un sous-ensemble haut 12.

Le sous-ensemble bas 11 est une structure rigide avec deux équerres latérales 111, les deux équerres étant agencées de manière sensiblement symétriques par rapport à un plan de symétrie verticale XZ du siège à proximité de bords latéraux du siège. Chaque équerre 111 comporte une branche horizontale 114, sensiblement horizontale dans le repère du siège, et une branche verticale 112, sensiblement verticale ou légèrement inclinée dans le repère siège généralement entre 0° et 20°. Les deux équerres 111 sont fixées entre elles par des barres de liaison 113 qui sont agencées pour apporter au sous-ensemble bas 11 une rigidité adaptée aux efforts pouvant être subits lors de l'utilisation du siège.

Le sous-ensemble bas 11 forme des pieds du siège comportant des fixations 113 agencées sur les branches horizontales 114 des équerres 111 de sorte à fixer le siège par les dites fixations à une structure du véhicule, dans l'exemple illustré représentée par des rails de plancher 90.

Chaque branche verticale 112 comporte un rail de guidage inférieur 115 dont un axe longitudinal est orienté suivant une direction sensiblement verticale.

Un support de baquet 30 est agencé mobile sur l'équerre 111 à laquelle il est attaché de sorte à pouvoir être déplacé en hauteur le long de la branche verticale 112 de l'équerre considérée.

Chaque support de baquet 30 comporte un bras antérieur 31 orienté vers l'avant de sorte à s'étendre sous l'assise 21 du baquet 20. Avantageusement, le bras est conçu pour ne pas subir de déformation permanente sensible dans les conditions normales d'utilisation du siège, c'est-à-dire en particulier sous les conditions limites des accélérations subies en utilisation, et pour absorber l'énergie en se déformant dans le cas d'accélération de crash pour limiter l'accélération subie par un occupant du siège. Dans une forme de réalisation, non illustrée, le bras présente une rigidité suffisante pour ne pas être sensiblement déformé lors des accélérations liées à un crash et à transmettre les forces à des absorbeurs d'énergie spécifiques monté sur le siège ou supportant le siège. Dans une autre forme de réalisation, non illustrée, le bras intègre des moyens d'absorption dynamique de l'énergie en cas de crash, par exemple des bielles absorbant l'énergie par friction ou par déformation.

Le support de baquet 30 est mobile suivant la direction déterminée par le rail de guidage inférieur 115 de la branche verticale 112 de l'équerre 111 correspondante, le déplacement suivant la direction sensiblement verticale déterminée par le rail de guidage inférieur 115 étant le seul degré de mouvement du support de baquet dans le repère du siège.

Dans l'exemple de réalisation illustré, chaque support de baquet 30 comporte deux galets ou patins, non visibles sur la figure 2, décalés suivant la direction longitudinale du rail de guidage inférieur 115 qui coulissent de manière ajustée dans une gorge dudit rail de guidage inférieur pour permettre audit support de baquet d'être mobile suivant une direction longitudinale du rail de guidage inférieur, sensiblement vertical, en immobilisant le support de baquet dans les autres directions de déplacement et en rotation.

Chaque bras antérieur 31 est solidaire du baquet 20 par une liaison articulée avec l'assise 21 autour d'un axe 33 parallèle à l'axe transversal Y du repère siège.

Le sous-ensemble haut 12 comporte deux montants latéraux 21 reliés rigidement par au moins une traverse 122 et agencés sensiblement verticaux.

Le sous-ensemble haut 12 est assemblée au sous-ensemble bas 11 mobile en rotation autour d'un axe de basculement 32 orienté suivant l'axe Y transversal du repère siège.

L'axe de basculement 32 est situé sur le sous-ensemble bas 11 dans une zone de chaque équerre 111 proche de la liaison entre la branche horizontale 114 et la branche verticale 112 de l'équerre considérée, en pratique dans une zone proche d'une extrémité inférieure des rails de guidage inférieurs (115), et également proche du plancher du véhicule sur lequel est fixé le siège, et adaptée à reprendre les efforts introduits dans le siège au niveau de l'axe de basculement 32. ;

L'axe de basculement 32 est également situé sur le sous-ensemble haut 12 dans une zone proche d'une extrémité inférieure 123 de chacun des montants latéraux 21.

Il résulte de cette configuration des sous-ensembles bas et haut que le sous-ensemble haut 12 est articulé par une extrémité inférieure dudit sous-ensemble haut à distance des rails de guidage supérieurs.

Un écartement entre des flans extérieurs des montants latéraux 121 du sous-ensemble haut 12 correspond, à un jeu fonctionnel prés et au moins sur une hauteur commune aux sous-ensembles bas et haut, à un écartement entre des flans intérieurs des branches verticales 112 des équerres 111 du sous-ensemble bas.

Suivant cet agencement, les montants latéraux 121 dans une position sensiblement verticale sont en mesure de se déplacer en rotation autour de l'axe de basculement 32 entre les équerres 111 et de prendre des positions, plus ou moins inclinées par rapport à la verticale stricte déterminée par l'orientation de l'axe Y, sensiblement parallèles aux branches verticales 112 des dites équerres.

Un dispositif de verrouillage 124 est agencé pour libérer, en position déverrouillée, et immobiliser, en position verrouillée, en rotation autour de l'axe de basculement 32 le sous-ensemble haut 12 par rapport au sous-ensemble bas 11.

Le dispositif de verrouillage 124 assure une immobilisation du sous-ensemble haut 12 dans au moins deux positions angulaires différentes autour de l'axe de basculement, les montants latéraux 121 dudit sous-ensemble haut déterminant ainsi au moins deux inclinaisons dudit sous-ensemble haut.

Chaque montant latéral 121 comporte en outre dans une partie supérieure dudit montant au moins un rail de guidage supérieur 125.

Comme il sera compris ultérieurement des longueurs des rails de guidage inférieur 115 et des rails de guidage supérieur 125 sont telles que des chariots, galets ou patins de glissement circulant dans lesdits rails inférieurs et supérieurs ont sensiblement les mêmes courses.

Suivant l'agencement qui vient d'être décrit de la structure 10 et de ses principaux éléments constitutifs, les rails de guidage supérieurs 125 peuvent être inclinés par une rotation autour de l'axe de basculement 32 par rapport aux rails de guidage inférieurs 115 ce qui a pour conséquences, en raison de la position dudit axe de basculement, de déplacer suivant la direction longitudinale X les rails de guidage supérieurs 125, les rails de guidage inférieurs 115 étant immobile dans le repère siège.

Un basculement vers l'avant du sous-ensemble haut 12 a pour conséquence de déplacer les rails de guidage vers l'avant, une extrémité supérieure 126 de chacun des montants latéraux 121 avançant, en première approximation, dans le repère siège de h x sin(alpha) si h est la distance de l'extrémité supérieure 126 à l'axe de basculement 32 et alpha est la valeur de l'angle duquel est basculé le sous-ensemble haut. Il doit être compris ici que l'angle alpha considéré est suffisamment petit pour que son cosinus puisse être, en première approximation, considéré sensiblement égal à 1.

En raison de la position décalée vers le bas par rapport aux rails de guidage supérieurs 125 de l'axe de basculement 32, les dits rails de guidage supérieur sont déplacés globalement suivant la direction longitudinale X par la rotation du sous-ensemble haut 12.

En considérant à nouveau la figure 1, le baquet 20 est solidaire de la structure 10 d'une part par les bras antérieurs 31 des supports de baquet 30 et d'autre part par des éléments de guidage 28.

Chaque bras antérieur 31 maintien le baquet 20 au sous-ensemble bas 11 par une liaison articulée avec l'assise 21 autour d'un axe 33 parallèle à l'axe transversal Y du repère siège.

Les éléments de guidage 28 sont fixés au dossier 22 et comporte des galets ou des patins agencés pour se déplacer dans des gorges des rails de guidage supérieurs 125.

Suivant cet agencement lorsque le baquet 20 est déplacé en hauteur, les supports de baquet 30 suivent une trajectoire fixe dans le repère siège déterminée par les rails de guidage inférieurs 115 et les éléments de guidage 28 suivent une trajectoire déterminée par les rails de guidage supérieurs 125 et donc dépendante de l'angle avec lequel le sous-ensemble haut 12 est incliné par rapport au sous-ensemble bas 11.

Sauf dans le cas particulier où les trajectoires déterminées par les rails de guidage inférieurs et par les rails de guidage supérieurs sont parallèles, le déplacement en hauteur du siège conduit à un mouvement angulaire du siège dans un plan longitudinal, déterminé par la position relative des rails de guidage inférieurs 115 et des rails de guidage supérieurs 125, qui se produit sans contrainte du fait de la liaison articulée de l'assise 21 sur les bras antérieurs 31 et du fait d'une liaison des éléments de guidage 28 fixés au dossier 22 permettant une rotation du dossier par rapport au sous-ensemble haut 12.

Par exemple les éléments de guidage 28 sont des galets dont les axes sont alignés et parallèles à l'axe transversal Y. Par exemple les éléments de guidage 28 sont des patins montés tournants sur des axes alignés et parallèles à l'axe transversal Y.

Ainsi lorsque les rails de guidage supérieurs 125 sont plus inclinés vers l'arrière que les rails de guidage inférieurs 115, le dossier recule plus, au niveau de la liaison avec les éléments de guidage 28, que l'assise, au niveau de la liaison avec les bras antérieurs 31, lorsque le baquet est monté, ce qui a pour effet de faire basculer le baquet intégralement vers l'arrière lors de sa montée.

Le siège en position haute est dans ce cas plus incliné vers l'arrière qu'en position basse.

Inversement, lorsque les rails de guidage supérieurs 125 sont moins inclinés vers l'arrière que les rails de guidage inférieurs 115, par exemple verticaux, le dossier recule moins, au niveau de la liaison avec les éléments de guidage 28, que l'assise, au niveau de la liaison avec les bras antérieurs 31, lorsque le baquet est monté, ce qui a pour effet de faire basculer le baquet intégralement vers l'avant lors de sa montée.

Le siège en position haute est dans ce cas moins incliné vers l'arrière qu'en position basse.

Le siège comporte des moyens de verrouillage, non représentés sur les dessins, pour autoriser des mouvements verticaux du baquet 20 et pour immobiliser le baquet dans des positions souhaitées en hauteur. De tels moyens de verrouillage sont connus dans le domaine des sièges et le poids du siège et de son occupant est le cas échéant compensé, au moins partiellement, par des éléments ressort tels que des bielles de compensation d'effort 34.

Les moyens de verrouillage 124 de la rotation du sous-ensemble haut 12 par rapport au sous-ensemble bas 11 consistent par exemple en des pions 126 coulissants du sous-ensemble haut qui sont engagés dans des alésages, ajustés pour éviter les jeux indésirables, par exemple un alésage arrière 116a et un alésage avant 116b, du sous-ensemble bas pour bloquer la rotation autour de l'axe de basculement 32.

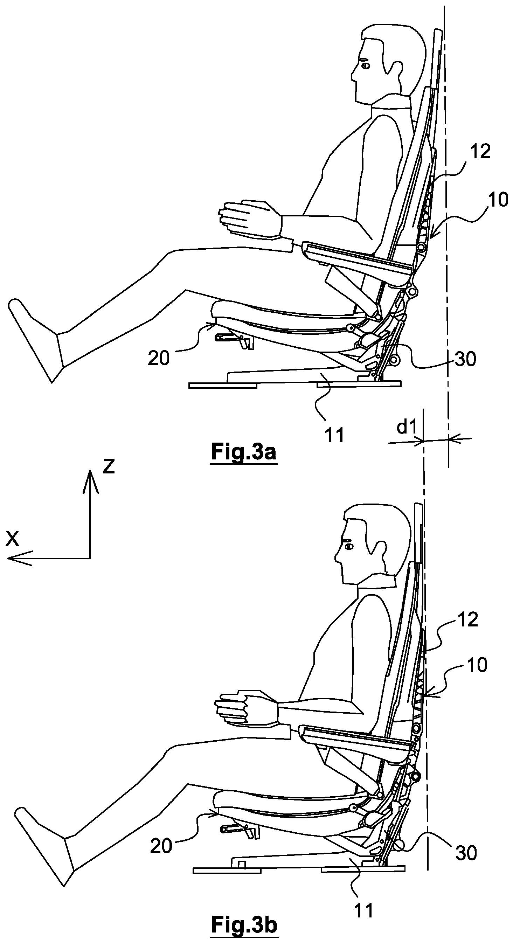

Dans les configurations du siège 100 illustrées sur les figures 3a et 3b, une surface d'appui d'un occupant du siège sur le dossier 22 est légèrement inclinée vers l'arrière pour des raisons ergonomiques.

Sur la figure 3a le sous-ensemble haut 12 est dans une position basculée vers l'arrière par rapport à sa position sur la figure 3b, le baquet étant réglé à une même position en hauteur, en position basse dans ce cas.

Dans le cas illustré, le basculement est d'un angle d'environ deux degrés seulement.

Un effet visible en comparant la figure 3a et la figure 3b tient à un avancement dans le repère siège d'une distance **d1** d'une limite arrière du siège.

Le déplacement de la limite la plus arrière du siège est matérialisé par un trait discontinu, en fonction de l'angle dans lequel est immobilisé le sous-ensemble haut, le siège sur les deux figures 3a et 3b étant représentées avec une même position des fixations suivant l'axe X.

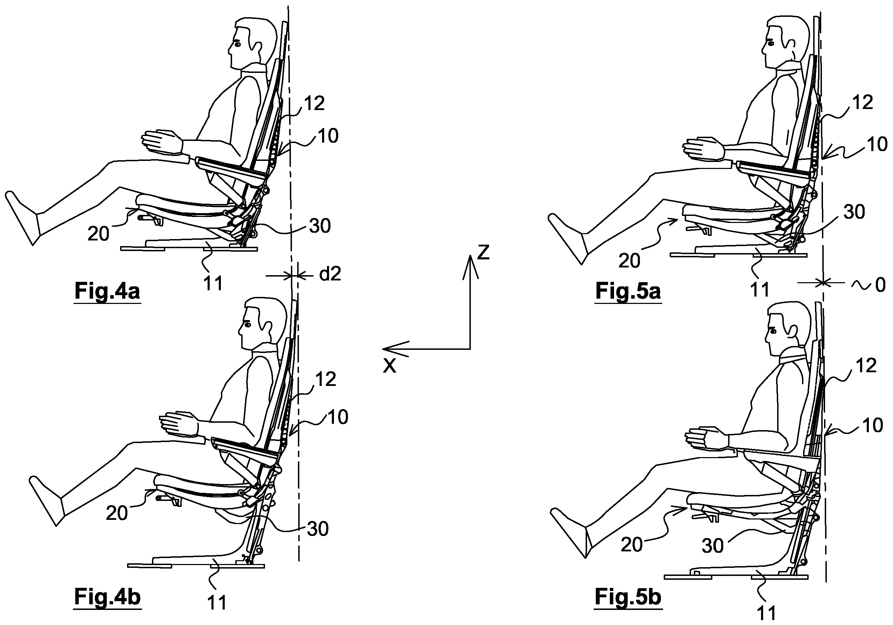

Lorsque que le sous-ensemble haut 12 et ses rails de guidage supérieurs 125 sont dans une position inclinée vers l'arrière en raison d'un angle d'inclinaison choisi autour de l'axe de basculement, cas des figures 4a et 4b, le réglage du baquet 20 dans une position haute, figure 4b, par rapport à une position basse, figure 4a, a pour conséquence que la limite arrière du siège recule, dans le repère siège, d'une distance d2. Ce recul se produit bien que le baquet dans l'exemple illustré bascule du fait de son changement de position en hauteur de l'ordre de deux degrés et demi vers l'avant.

Lorsque que le sous-ensemble haut 12 et ses rails de guidage supérieurs 125 sont dans une position redressée en raison d'un angle d'inclinaison choisi, cas des figures 5a et 5b, la limite arrière du siège lorsque le baquet 20 est dans une position haute, figure 5b, par rapport à une position basse, figure 4a, reculera moins que dans le cas précédent, voire par un choix adapté de l'angle de rotation, ne reculera pas de manière sensible comme dans l'exemple illustré.

Il doit être noté que, dans le domaine des angles d'inclinaison considérés pour le sous-ensemble haut 12 autour de l'axe de basculement 32, le déplacement recherché des rails de guidage supérieurs 125 est obtenu avec de faible angles de rotation, quelques degrés, en général moins de dix degrés, ce qui permet de maintenir les rails de guidage inférieurs et supérieurs sensiblement parallèles ou avec sensiblement un même angle relatif et en conséquence l'amplitude du basculement du baquet lorsque le baquet est monté ou descendu n'est que peu affecté.

Le siège qui vient d'être décrit de manière détaillée est un exemple non limitatif de l'invention.

L'homme du métier pourra réaliser des variantes de la structure porteuse en particulier.

Ainsi l'exemple de réalisation de la structure porteuse présente une configuration où chacun des sous-ensembles bas et haut ont une structure symétrique gauche/droite des parties travaillantes avec deux équerres, deux montants, deux supports de baquet...

Bien qu'une telle configuration présente des avantages en terme de symétrie pour la transmission des efforts et en terme de sécurité en cas de défaillance de certains éléments, l'homme du métier pourra reprendre les principes de l'invention avec des structures axiales non doublées, par exemple un siège avec un piètement du type monopoutre, ou au contraire avec des sous-ensembles comportant plus de deux éléments travaillants alors que la description détaillée n'en illustre que deux.

Le nombre et la forme des rails de guidage inférieurs et supérieurs peuvent également être différents de ceux décrits ou illustrés pour autant que le ou les supports de baquet et le ou les éléments de guidage du dossier soient guidés chacun suivant la trajectoire recherchée lors des déplacement en hauteur du baquet.

Il est ainsi obtenu un siège 100, dont le baquet 20 rigide peut être réglé en hauteur et ajusté en inclinaison vers l'arrière ou vers l'avant, dans lequel les principaux efforts du baquet sont repris au niveau de la structure 10 sur le sous-ensemble bas 11 qui est rigide et directement fixée à une structure du véhicule. En outre le positionnement des moyens de verrouillage 124 dans une partie haute du sous-ensemble bas 11 permet de ne pas introduire d'efforts de torsion au niveau de l'axe de basculement 32 dans les cas d'efforts vers l'avant ou vers l'arrière.

Le siège 100 s'avère donc plus léger et moins coûteux à réaliser et à entretenir et comporte en outre peu de parties mobiles.

En particulier la position dans laquelle le baquet 20 est ajusté en inclinaison vers l'avant permet de supprimer, ou au moins de limiter, le recul de la partie la plus arrière du siège 100 lorsque le siège est réglé en hauteur, sans avancer le baquet du siège qui est maintenu au niveau de l'assise 21, et donc permet de ne pas sacrifier le réglage en hauteur, important pour adapter la position du siège en fonction de la taille de son occupant, lorsque la limite arrière du siège ne doit pas reculer.

Cette absence ou limitation du recul s'avère importante lorsque des obstacles, par exemple une cloison, est située derrière le siège.

Il est ainsi possible de mettre en oeuvre un même modèle de siège 100 que celui-ci soit contraint ou non par des obstacles situés derrière le siège soit que le modèle de siège doit être monté sur différents véhicules soit que le modèle de siège doit être monté en différents emplacements d'un même véhicule.

Lorsqu'un siège 100 n'est pas contraint par un obstacle arrière, le siège peut être ajusté avec un angle donnant une inclinaison du baquet vers l'arrière.

Lorsqu'un siège 100 est contraint par un obstacle arrière, le siège est ajusté avec un angle du sous-ensemble haut 12 donnant une inclinaison réduite vers l'arrière.

L'ajustement de l'angle de rotation vers l'avant ou vers l'arrière est réalisé en déverrouillant les moyens de verrouillage 124 pour libérer la rotation du sous-ensemble haut 12 par rapport au sous-ensemble bas 11 et à verrouiller à nouveau les dits moyens de verrouillage lorsque le sous-ensemble haut aura été amenée dans la position souhaitée.

Le déverrouillage et le verrouillage des moyens de verrouillage sont par exemple mis en oeuvre par des opérateurs en charge de l'installation des sièges ou de leur maintenance. Le déverrouillage et le verrouillage des moyens de verrouillage peuvent également être mis en oeuvre par l'utilisateur du siège, par exemple pour des raisons techniques ou de choix personnel si le siège ne risque pas d'interférence mécanique avec d'autres éléments du véhicule.

Dans un mode particulier de mise en oeuvre, le réglage du siège 100 est modifié en fonction d'un environnement variable du véhicule dans lequel le siège est installé.

Par exemple le siège est installé proche d'une cloison située derrière le siège avec une distance de séparation qui permet d'utiliser le siège avec une inclinaison du sous-ensemble haut vers l'arrière dans une première configuration de la cloison, mais qui ne permet pas cette inclinaison dans une seconde configuration de la cloison par exemple lorsque la cloison est épaissie par un blindage temporaire.

## Revendications

1. Siège (100) de véhicule comportant un baquet (20), ledit baquet comportant une assise (21) et un dossier (22), intégral avec ou fixé rigidement à ladite assise, comportant une structure porteuse (10) sur laquelle est fixé le baquet (20) et comportant des fixations (113) pour fixer ladite structure porteuse à une structure du véhicule, une hauteur du baquet (20) sur la structure porteuse (10) étant réglable, dans lequel la structure porteuse (10) comporte un sous-ensemble bas (11) formant un piétement du siège et dont au moins un support de baquet (30) est monté mobile en hauteur, suivant une direction sensiblement verticale déterminée par au moins un rail de guidage inférieur (115), fixes dans un repère siège, de ladite structure inférieure ;
**caractérisé en ce que** :
- la structure porteuse (10) comporte un sous-ensemble haut (12) assemblé au sous-ensemble bas (11), mobile en rotation par rapport audit sous-ensemble bas autour d'un axe de basculement (32), sensiblement perpendiculaire à un plan de symétrie XZ d'ensemble du siège (100), situé sur le sous-ensemble bas (11) dans une zone à proximité d'une extrémité inférieure des rails de guidage inférieurs (115) et situé sur le sous-ensemble haut (12) dans une zone proche d'une extrémité inférieure (123) dudit sous-ensemble haut (12) ;
- le sous-ensemble haut (12) comporte au moins un rail de guidage supérieur (125), sensiblement vertical situé au-dessus de l'au moins un rail de guidage inférieur (115) ; et
- le baquet (20) est solidaire du support de baquet (30) de manière articulée au niveau de l'assise (21) autour d'un axe (33) perpendiculaire au plan de symétrie d'ensemble du siège et comporte au moins un élément de guidage (28), fixé au dossier (22), coulissant dans l'au moins un rail de guidage supérieur (125).

2. Siège suivant la revendication 1 dans lequel le sous-ensemble haut (12) comporte au moins deux positions angulaires stables autour de l'axe de basculement (32) : une position inclinée vers l'arrière et une position redressée.

3. Siège suivant la revendication 1 ou la revendication 2 dans lequel le sous-ensemble bas (11) comporte deux équerres (111), chaque équerre comportant une branche sensiblement verticale (112) comportant au moins un rail de guidage inférieur (115) s'étendant sur toute ou partie d'une longueur de ladite branche verticale.

4. Siège suivant l'une des revendications précédentes dans lequel le sous-ensemble haut (12) comporte au moins deux montants latéraux (121) solidarisés par au moins une traverse (122), chaque montant latéral comportant au moins un rail de guidage supérieur (125).

5. Siège suivant l'une des revendications précédentes dans lequel des moyens de verrouillage (124) sont agencés sur le sous-ensemble haut (12) pour immobiliser en rotation autour de l'axe de basculement (32) ledit sous-ensemble haut par rapport au sous-ensemble bas (11) et ou sont agencés sur le sous-ensemble bas (11) pour immobiliser en rotation autour de l'axe de basculement (32) le sous-ensemble haut (12) par rapport audit sous-ensemble bas.

6. Siège suivant l'une des revendications précédentes dans lequel l'au moins un support de baquet (30) comporte au moins un bras antérieur (31) orienté vers l'avant du siège et dont une extrémité avant est articulée sous l'assise (21).

7. Siège suivant la revendication 6 dans lequel le bras antérieur (31) est sans déformation permanente sensible lorsque le siège est soumis à des accélérations limites en utilisation et déformable lorsque le siège est soumis à des accélérations d'un cas de crash de sorte à absorber l'énergie.

8. Siège suivant la revendication 6 dans lequel le bras antérieur (31) comporte des moyens d'absorption dynamique de l'énergie en cas de crash, par exemple des bielles absorbant l'énergie par friction ou par déformation.

9. Siège suivant l'une des revendications précédentes dans lequel le sous-ensemble haut (12) comporte une position angulaire autour de l'axe de basculement, dans laquelle ledit sous-ensemble haut est verrouillable par rapport au sous-ensemble bas (11), telle que lors de mouvements verticaux du baquet (20) une partie la plus arrière du siège (100) est, sensiblement fixe suivant une direction longitudinale du siège, vers l'avant ou vers l'arrière du siège, dans un repère siège fixe par rapport au sous-ensemble bas.

## Patentansprüche

1. Fahrzeugsitz (100), welcher eine Schale (20) aufweist, wobei die Schale eine Sitzfläche (21) und eine Rückenlehne (22) aufweist, welche mit der Sitzfläche integral oder an ihr starr befestigt ist, welcher eine Tragstruktur (10) aufweist, an welcher die Schale (20) befestigt ist und welcher Befestigungen (113) aufweist, um die Tragstruktur an einer Struktur des Fahrzeugs zu befestigen, wobei eine Höhe der Schale (20) über der Tragstruktur (10) einstellbar ist, wobei die Tragstruktur (10) eine untere Unterbaugruppe (11) aufweist, welche das Untergestell des Sitzes bildet und an dem mindestens einen Schalenträger (30) höhenbeweglich gemäß einer im Wesentlichen vertikalen Richtung montiert ist, welche durch mindestens eine untere, in einem Koordinatensystem des Sitzes feste Führungsschiene (115) der unteren Struktur definiert ist;
**dadurch gekennzeichnet, dass**:
- die Tragstruktur (10) eine mit der unteren Unterbaugruppe (11) zusammengebaute obere Unterbaugruppe (12) aufweist, welche in Bezug auf die untere Baugruppe drehbeweglich um eine Schwenkachse (32) ist, welche im Wesentlichen senkrecht zu einer Symmetrieebene XZ der Baugruppe des Sitzes (100) verläuft und sich über der unteren Baugruppe (11) in einem Bereich in der Nähe eines unteren Endes der unteren Führungsschienen (115) befindet und sich über der oberen Unterbaugruppe (12) in einem Bereich nahe einem unteren Ende (123) der oberen Unterbaugruppe (12) befindet;
- die obere Unterbaugruppe (12) mindestens eine obere im Wesentlichen vertikale Führungsschiene (125) aufweist, welche oberhalb von der mindestens einen unteren Führungsschiene (115) angeordnet ist; und
- die Schale (20) mit dem Schalenträger (30) im Bereich der Sitzfläche (21) gelenkig um eine Achse (33) verbunden ist, welche senkrecht zur Symmetrieebene der Baugruppe des Sitzes verläuft, und mindestens ein Führungselement (28) aufweist, welches an der Rückenlehne (22) befestigt ist und in der mindestens einen oberen Führungsschiene (125) gleitet.

2. Sitz nach Anspruch 1, bei welchem die obere Unterbaugruppe (12) mindestens zwei stabile Winkelpositionen um die Schwenkachse (32) aufweist: eine nach hinten geneigte Position und eine aufgerichtete Position.

3. Sitz nach Anspruch 1 oder Anspruch 2, bei welchem die untere Unterbaugruppe (11) zwei Winkel (111) aufweist, wobei jeder Winkel einen im Wesentlichen vertikalen Zweig (112) aufweist, welcher mindestens eine untere Führungsschiene (115) aufweist, welche sich über die ganze oder einen Teil einer Länge des vertikalen Zweiges erstreckt.

4. Sitz nach einem der vorhergehenden Ansprüche, bei welchem die obere Unterbaugruppe (12) mindestens zwei seitliche Streben (121) aufweist, welche fest mit einem Querträger (122) verbunden sind, wobei jede seitliche Strebe mindestens eine obere Führungsschiene (125) aufweist.

5. Sitz nach einem der vorhergehenden Ansprüche, bei welchem Verriegelungsmittel (124) an der oberen Unterbaugruppe (12) eingerichtet sind, um die obere Unterbaugruppe in Drehrichtung um die Schwenkachse (32) in Bezug auf die untere Unterbaugruppe (11) zu blockieren, und oder an der unteren Unterbaugruppe (11) eingerichtet sind, um die obere Unterbaugruppe (12) in Drehrichtung um die Schwenkachse (32) in Bezug auf die untere Unterbaugruppe zu blockieren.

6. Sitz nach einem der vorhergehenden Ansprüche, bei welchem mindestens ein Schalenträger (30) mindestens einen vorderen Arm (31) aufweist, welcher zum vorderen Teil des Sitzes ausgerichtet ist und dessen eines vordere Ende unter der Sitzfläche (21) angelenkt ist.

7. Sitz nach Anspruch 6, bei welchem der vordere Arm (31), wenn der Sitz im Einsatz Grenzbeschleunigungen unterworfen wird, ohne permanente Verformung empfindlich ist und, wenn der Sitz Beschleunigungen im Falle eines Aufpralls unterworfen wird, verformbar ist, um die Energie zu absorbieren.

8. Sitz nach Anspruch 6, bei welchem der vordere Arm (31) Mittel zur dynamischen Absorption der Energie im Falle eines Aufpralls aufweist, zum Beispiel durch Reibung oder Verformung absorbierende Stangen.

9. Sitz nach einem der vorhergehenden Ansprüche, bei welchem die obere Unterbaugruppe (12) eine Winkelposition um die Schwenkachse aufweist, in welcher die obere Unterbaugruppe in Bezug auf die untere Unterbaugruppe (11) verriegelbar ist, so dass bei vertikalen Bewegungen der Schale (20) ein hinterster Teil des Sitzes (100) im Wesentlichen gemäß einer longitudinalen Richtung des Sitzes in Richtung des vorderen Teils oder in Richtung des hinteren Teils des Sitzes in einem in Bezug auf die untere Baugruppe festen Koordinatensystem des Sitzes fest ist.

## Claims

1. Seat (100) for a vehicle, comprising a bucket (20), said bucket comprising a seat base (21) and a backrest (22) integral with or rigidly fixed to said seat base, comprising a supporting structure (10) on which the bucket (20) is fixed, and comprising attachment (113) for fixing said supporting structure to a vehicle structure, a height of the bucket (20) on the supporting structure (10) being adjustable, wherein the supporting structure (10) comprises a lower sub-assembly (11) which forms a seat subframe and of which at least one bucket support (30) is mounted movable in height in a substantially vertical direction determined by at least one lower guide rail (115), fixed in a seat reference system, of said lower structure;
**characterized in that**:
- the supporting structure (10) comprises an upper sub-assembly (12) assembled with the lower sub-assembly (11) and movable in rotation relative to said lower sub-assembly around a pivot axis (32) which is substantially perpendicular to a plane of overall symmetry XZ of the seat (100) and is situated on the lower sub-assembly (11) in a zone close to a lower end of the lower guide rails (115) and situated on the upper sub-assembly (12) in a zone close to a lower end (123) of said upper sub-assembly (12);
the upper sub-assembly (12) comprises at least one upper guide rail (125) which is substantially vertical and situated above the at least one lower guide rail (115); and
- the bucket (20) is fixed to the bucket support (30) in an articulated manner at the seat base (21) around an axis (33) perpendicular to the plane of overall symmetry of the seat, and comprises at least one guide element (28) fixed to the backrest (22) and sliding in at least one upper guide rail (125).

2. Seat according to Claim 1, wherein the upper sub-assembly (12) comprises at least two stable angular positions around the pivot axis (32): a position inclined towards the rear, and an upright position.

3. Seat according to Claim 1 or Claim 2, wherein the lower sub-assembly (11) comprises two square brackets (111), each square bracket comprising a substantially vertical branch (112) comprising at least one lower guide rail (115) extending over all or part of the length of said vertical branch.

4. Seat according to any of the preceding claims, wherein the upper sub-assembly (12) comprises at least two lateral uprights (121) fixed by at least one cross member (122), each lateral upright comprising at least one upper guide rail (125).

5. Seat according to any of the preceding claims, wherein locking means (124) are arranged on the upper sub-assembly (12) to immobilise said upper sub-assembly in rotation around the pivot axis (32) relative to the lower sub-assembly (11), and/or are arranged on the lower sub-assembly (11) to immobilise the upper sub-assembly (12) in rotation around the pivot axis (32) relative to said lower sub-assembly.

6. Seat according to any of the preceding claims, wherein the at least one bucket support (30) comprises at least one front arm (31) oriented towards the front of the seat, a front end of which is articulated below the seat base (21).

7. Seat according to Claim 6, wherein the front arm (31) undergoes no substantial permanent deformation when the seat is subjected to limit accelerations in use, and is deformable when the seat is subjected to accelerations in the case of a crash, so as to absorb the energy.

8. Seat according to Claim 6, wherein the front arm (31) comprises means for dynamic absorption of energy in the case of a crash, for example connecting rods absorbing the energy by friction or deformation.

9. Seat according to any of the preceding claims, wherein the upper sub-assembly (12) comprises an angular position around the pivot axis in which said upper sub-assembly can be locked relative to the lower sub-assembly (11), such that on vertical movements of the bucket (20), a rearmost part of the seat (100) is substantially stationary in relation to the lower sub-assembly in the longitudinal direction of the seat, towards the front or rear of the seat, in a seat reference system.
